# EUROPEAN PATENT APPLICATION

(11) **EP 3 536 525 A1**
(43) Date of publication of application: **11.09.2019**
(21) Application number: 17867661.5
(22) Date of filing: 19.10.2017
(51) Int. Cl.: B60G 21/055, F16C 11/06

(54) **STABILIZER LINK AND STABILIZER WITH STABILIZER LINK**

(30) Priority: 02.11.2016 JP 2016215636
(71) Applicant: NHK Spring Co., Ltd., Yokohama-shi, Kanagawa 236-0004 (JP)
(72) Inventor: KURODA Shigeru, Yokohama-shi Kanagawa 236-0004 (JP)
(74) Representative: V.O.
(86) International application number: PCT/JP2017/037815
(87) International publication number: WO 2018/083995

(57) **Abstract**

The stabilizer link is used for linking a suspension and a stabilizer provided in a vehicle and includes: a support bar; and a pair of ball joints provided at two ends of the support bar, each of the pair of ball joints includes: a ball stud including a stud portion and a ball portion, and a support member which rotatably supports the ball portion of the ball stud and to which the support bar is connected, at least one end of the support bar is provided with a link protector, and the link protector includes: a main portion having a cylindrical shape with a bottom and covering the support member, a drainage mechanism for discharging water that has entered a gap between the support member and the link protector, and a holding portion holding the support bar.

## Description

### Technical Field

The present invention relates to a stabilizer link for linking a suspension and a stabilizer provided in a vehicle, and the stabilizer with the stabilizer link.

Priority is claimed on Japanese Patent Application No. 2016-215636, filed November 2, 2016, the content of which is incorporated herein by reference.

### Background

A vehicle is provided with a suspension that absorbs and reduces shocks and vibrations transmitted to a vehicle body from the road surface via wheels, and a stabilizer for increasing the roll rigidity of the vehicle body. In order to link the suspension and the stabilizer, a rod-shaped member called stabilizer link is used for the vehicle. As shown in, for example, Patent Document 1, the stabilizer link is configured including a support bar and ball joints provided at both ends of the support bar.

The ball joint of Patent Document 1 is configured of a ball stud including a stud portion and a ball portion, a ball seat provided at each of ends of the support bar and made of resin rotatably accommodating the ball portion of the ball stud, and a housing made of steel and provided so as to cover the outer surface of the ball seat. The ball seat made of resin is fixed by heat caulking to the housing made of steel. The ball joint is configured of the ball stud and the ball seat.

Further, Patent Document 2 discloses a stabilizer link provided with a protection cap that protects a ball stud.

### Document of Related Art

### Patent Document

[Patent Document 1] Japanese Unexamined Patent Application, First Publication No. 2016-151303
[Patent Document 2] Published Japanese Translation No. 2008-504495 of the PCT International Publication

### Summary

### Technical Problem

Specifically, in the stabilizer link of Patent Document 1, bosses integrally formed so as to protrude from the ball seat made of resin are penetrated through through-holes provided in the housing made of steel, and the penetrated ends of the bosses are subjected to the heat caulking, whereby the ball seat is fixed to the housing. The penetrated ends of the bosses are exposed outward from the through-holes of the housing.

A case is assumed that flying objects such as stones collide with the housing of the stabilizer link of Patent Document 1 depending on the mounting state thereof. If the flying objects collide with the penetrated ends of the bosses, there is a concern that the ball joint function will be disturbed.

The present invention has been made in view of the above circumstances, and an object thereof is to provide a stabilizer link and a stabilizer with a stabilizer link, which can limit the ball joint function from being disturbed due to disturbance such as collision of the flying objects.

### Solution to Problem

In order to solve the above problems, one aspect of the present invention is a stabilizer link for linking a suspension and a stabilizer provided in a vehicle, the stabilizer link including: a support bar; and a pair of ball joints provided at both ends of the support bar, wherein each of the pair of ball joints includes: a ball stud including a stud portion and a ball portion, and a support member which rotatably supports the ball portion of the ball stud and to which the support bar is connected, at least one end of the support bar is provided with a link protector, and the link protector includes: a main portion having a cylindrical shape with a bottom and covering the support member, a drainage mechanism for discharging water that has entered a gap between the support member and the link protector, and a holding portion holding the support bar.

The link protector of the stabilizer link of the above aspect of the present invention is provided with the main portion having a cylindrical shape with a bottom and covering at least one of the pair of the support members. The link protector further includes the drainage mechanism for discharging water that has entered the gap between the support member and the link protector, and the holding portion that holds the support bar. The holding portion holds the support bar, whereby the main portion of the link protector is attached to cover the support member.

According to the above aspect of the present invention, the link protector of the stabilizer link is provided with the main portion having a cylindrical shape with a bottom and covering at least one of the pair of the support members, and the main portion covering the support member protects the support member from collisions of the flying objects. As a result, the stabilizer link that limits the ball joint function from being disturbed due to disturbances such as the collisions of the flying objects can be obtained. Also, since the link protector is provided with the drainage mechanism for discharging water that has entered the gap between the support member and the link protector, a situation where the entered water intrudes inside the support member can be prevented in advance.

### Effects

According to the above aspect of the present invention, it is possible to obtain a stabilizer link and a stabilizer with a stabilizer link, which can limit the ball joint function from being disturbed due to disturbance such as collision of the flying objects.

### Brief Description of Drawings

FIG. 1 is a perspective view showing how a stabilizer link is mounted on a vehicle.
FIG. 2 is a perspective view of a stabilizer link of an embodiment of the present invention viewed obliquely from above.
FIG. 3 is a front view including a partial cross-sectional view of a ball joint of ball joints that are components of the stabilizer link of the embodiment of the present invention, to which a link protector is attached.
FIG. 4 is a front view of a ball joint of the ball joints that are components of the stabilizer link of the embodiment of the present invention, to which no link protector is attached.
FIG. 5 is a perspective view of the link protector of the embodiment of the present invention viewed obliquely from above.
FIG. 6A is a top view of the link protector of the embodiment of the present invention.
FIG. 6B is a cross-sectional view taken along line 6B-6B shown in FIG. 6A.
FIG. 6C is a front view of the link protector of the embodiment of the present invention.
FIG. 6D is a cross-sectional view taken along line 6D-6D shown in FIG. 6C.
FIG. 6E is a side view of the link protector viewed from the position of a holding portion.
FIG. 7 is a perspective view of the ball joint attached with the link protector of the embodiment of the present invention, viewed obliquely from above.
FIG. 8 is a perspective view of a link protector of a modification viewed obliquely from above.
FIG. 9A is a top view of the link protector of the modification.
FIG. 9B is a cross-sectional view taken along line 9B-9B shown in FIG. 9A.

### Description of Embodiments

Hereinafter, a stabilizer link of an embodiment of the present invention will be described in detail with reference to the drawings as appropriate.

Note that, in the drawings described below, in principle, the same reference signs are attached to members having the same functions or to members having functions corresponding to each other. Further, for convenience of description, the size and shape of members may be schematically shown through deformation or enlargement.

### <Configuration of Stabilizer Link 11 and Surroundings Thereof of Embodiment of Present Invention>

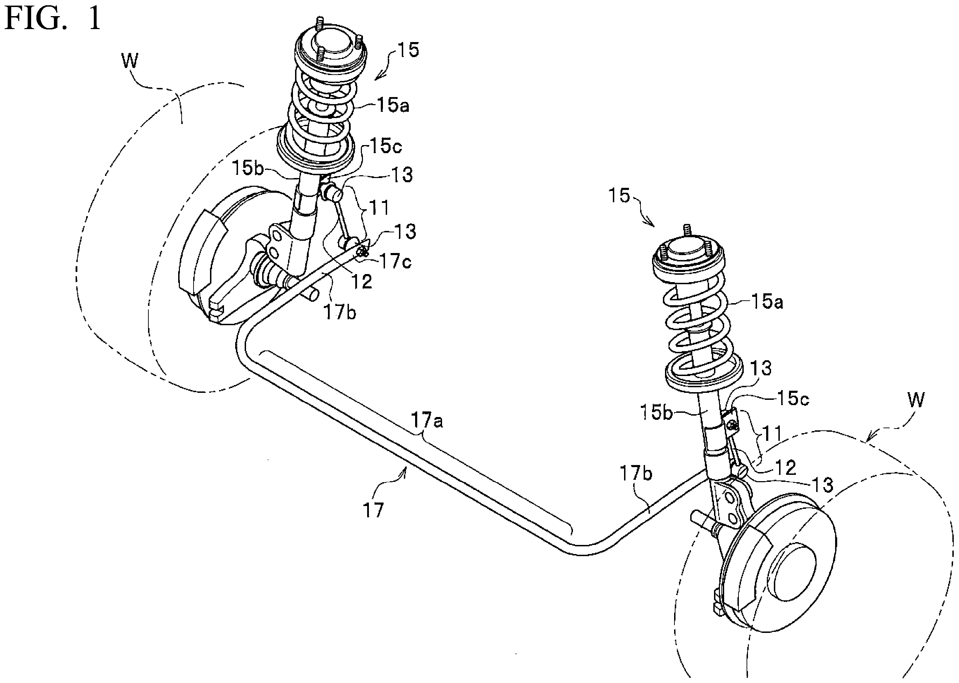

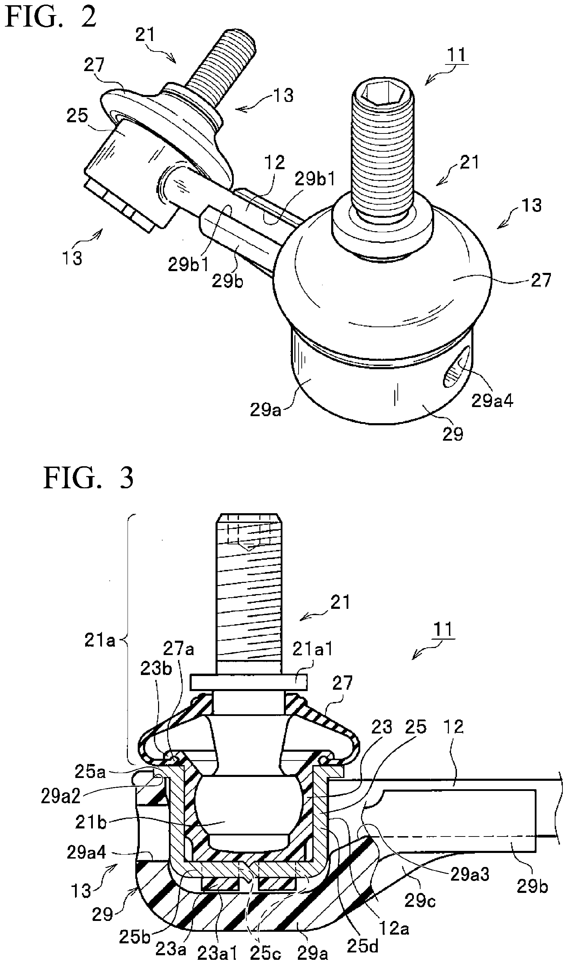

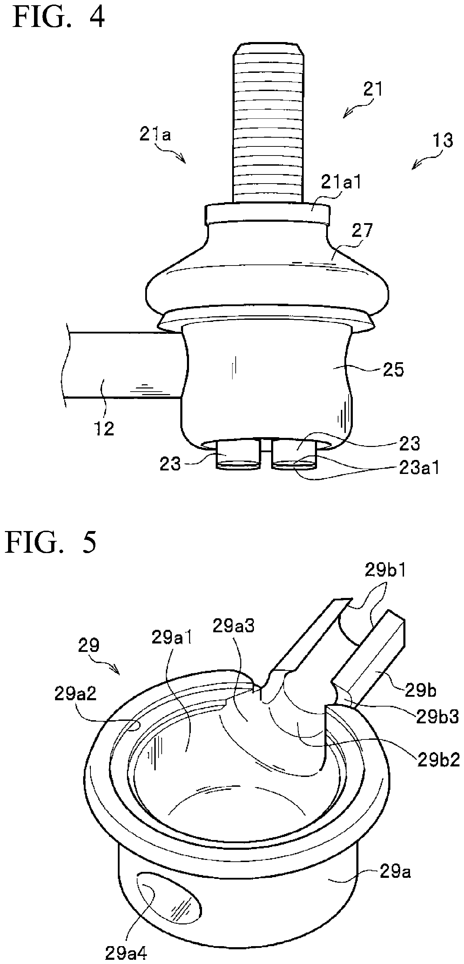

First, the configuration of a stabilizer link 11 and the surroundings thereof of the embodiment of the present invention will be described using an example in which the stabilizer link 11 is mounted on a vehicle (not shown). FIG. 1 is a perspective view showing how the stabilizer link 11 of the embodiment of the present invention is mounted on the vehicle. FIG. 2 is a perspective view of the stabilizer link 11 of the embodiment of the present invention viewed obliquely from above. FIG. 3 is a front view including a partial cross-sectional view of a ball joint 13 of a pair of ball joints 13 that are components of the stabilizer link 11 of the embodiment of the present invention, to which a link protector 29 is attached. FIG. 4 is a front view of a ball joint 13 of the ball joints 13 that are components of the stabilizer link 11 of the embodiment of the present invention, to which the link protector 29 is not attached.

As shown in FIG. 1, wheels W are mounted on a vehicle body (not shown) of the vehicle via suspensions 15. The suspension 15 includes, for example, a coil spring 15a and a shock absorber 15b in order to absorb and reduce shocks and vibrations transmitted to the vehicle body from the road surface via the wheel W.

As shown in FIG. 1, the left and right suspensions 15 are linked via a stabilizer 17 configured of a substantially U-shaped spring steel rod or the like. In order to increase the roll rigidity (resistance to torsional deformation) of the vehicle body and to limit the rolling of the vehicle, the stabilizer 17 includes a torsion bar 17a extending between the left and right wheels W, and a pair of arms 17b extending in a bent manner from both ends of the torsion bar 17a.

The stabilizer 17 and the shock absorber 15b supporting the wheel W are linked via the stabilizer link 11. A stabilizer with a stabilizer link is configured of the stabilizer 17 and the stabilizer link 11. Specifically, as shown in FIG. 1, one ball joint 13 of the pair of ball joints 13 is fastened and fixed to a bracket 15c of the shock absorber 15b through screw connection or the like. Further, as shown in FIG. 1, the other ball joint 13 thereof is fastened and fixed to an attachment portion 17c included in the arm 17b of the stabilizer 17 through screw connection or the like.

As shown in FIG. 1, the linking structure between the stabilizer 17 and the shock absorber 15b via the stabilizer link 11 is the same as each other with respect to the left and right wheels W.

As shown in FIGS. 1 and 2, the stabilizer link 11 is configured by providing the ball joint 13 at each of two ends of a substantially columnar (rod-shaped) support bar 12 made of metal such as steel.

As shown in FIG. 3, each ball joint 13 is configured including a ball stud 21 made of metal such as steel, a ball seat 23 (a support member) made of resin, and a substantially bowl-shaped (a cylindrical shape with a bottom) housing 25 (a support member) made of metal such as steel.

Hereinafter, for convenience, in FIGS. 3 and 4, the side of the stabilizer link 11 on which the ball stud 21 is provided is referred to as the upper side of the stabilizer link 11, and the side of the stabilizer link 11 on which the housing 25 is provided is referred to as the lower side of the stabilizer link 11. The attitude of the stabilizer link 11 provided in the vehicle is different from the attitude thereof shown in FIGS. 3 and 4, and as shown in FIG. 1, the stabilizer link 11 is provided in the vehicle in an attitude such that the support bar 12 extends substantially in a vertical direction.

As shown in FIG. 3, the ball stud 21 is configured including a columnar stud portion 21a at one end thereof, and a substantially spherical ball portion 21b at the other end thereof. That is, the stud portion 21a is arranged to extend in an up-down direction, and the ball portion 21b is connected to the lower end of the stud portion 21a. The stud portion 21a and the ball portion 21b are connected together through welding. The stud portion 21a and the ball portion 21b may be integrally formed.

As shown in FIG. 3, the stud portion 21a of the ball stud 21 includes a flange 21a1 at a position between its ends. The flange 21a1 protrudes from the outer circumferential surface of the stud portion 21a. An annular dust cover 27 made of an elastic material such as rubber is attached to a gap in the up-down direction between the flange 21a1 of the stud portion 21a and a flange-shaped upper annular end 25a (an engagement portion) included in the housing 25, so as to cover the gap. The upper end of the dust cover 27 is disposed below the flange 21al on the outer circumferential surface of the stud portion 21a, and the lower end of the dust cover 27 is disposed on the upper surface of the upper annular end 25a.

As shown in FIG. 3, an annular bulged attachment portion 27a is integrally formed at the lower end side of the dust cover 27. That is, the attachment portion 27a slightly protruding upward is provided at the radially inner end of the lower end portion of the dust cover 27 on the entire circumference of the dust cover 27. The attachment portion 27a of the dust cover 27 is sandwiched and fixed between a flange-shaped annular end 23b included in the ball seat 23 and the upper annular end 25a included in the housing 25. The fixing structure on the lower end side of the dust cover 27 is equivalent to the structure shown in Japanese Unexamined Patent Application, First Publication No. 2016-151303 (refer to, for example, FIG. 3). The dust cover 27 has functions of preventing the intrusion of rainwater, dust and the like into the ball joint 13 (in particular, the connection portion between the ball portion 21b of the ball stud 21 and the ball seat 23).

As shown in FIG. 3, the ball seat 23 has functions of rotatably accommodating and supporting the outer circumferential side surface of the ball portion 21b of the ball stud 21. The ball seat 23 of this embodiment is formed in a cylindrical shape (for example, a circular-cylindrical shape) with a bottom whose central axis extends in the up-down direction, and the annular end 23b protrudes outward in a radial direction from the upper end of the side wall of the ball seat 23. As shown in FIG. 3, four bosses 23a extending downward are integrally formed in the bottom portion of the ball seat 23 such that the number of the bosses 23a corresponds to the number of four through-holes 25c of the housing 25 described later.

As shown in FIG. 3, the housing 25 is formed in a cylindrical shape (for example, circular-cylindrical shape) with a bottom whose central axis extends in the up-down direction and is provided to cover the outer circumferential side surface (the outer circumferential surface of the side wall) and the bottom surface of the ball seat 23 made of resin. The upper annular end 25a protrudes outward in the radial direction from the upper end of the side wall of the housing 25. The housing 25 made of metal has functions of protecting the ball joint 13 including the ball seat 23 made of resin. The combination of the ball seat 23 and the housing 25 corresponds to the "support member" of the present invention.

As shown in FIG. 3, the four through-holes 25c are opened at equal intervals in a bottom portion 25b of the housing 25. That is, the four through-holes 25c penetrating the bottom portion 25b in the thickness direction thereof are provided at equivalent intervals in a direction around the axis of the stud portion 21a. These four through-holes 25c are used to fix the ball seat 23 to the housing 25. That is, in a state where the bosses 23a of the ball seat 23 are penetrated through the through-holes 25c of the housing 25, the heat caulking is applied to penetrated ends 23a1 (lower ends) of the bosses 23a. The ball seat 23 is fixed to the housing 25 through this heat caulking. One end 12a of the support bar 12 is connected to a circumferential side portion 25d (the side wall) of the housing 25 through welding. Not limited to the welding connection, the one end 12a of the support bar 12 may be connected to the side wall of the housing 25 using, for example, a fastening member (a bolt or the like).

As shown in FIGS. 3 and 4, the penetrated ends 23a1 of the bosses 23a of the ball seat 23 are exposed outward (downward in FIGS. 3 and 4) from the through-holes 25c of the housing 25. Therefore, depending on the mounting state such as the orientation of the housing 25, a case is assumed that flying objects such as stones collide with the penetrated ends 23a1 of the bosses 23a. If the flying objects collide with the penetrated ends 23a1 of the bosses 23a, there is a concern that the ball joint function will be disturbed. For example, there may be a case where the heat caulked portion of the penetrated end 23a1 is broken and the housing 25 cannot properly hold the ball seat 23, or a case where the housing 25 or the ball seat 23 is deformed and the smooth rotation of the ball portion 21b of the ball stud 21 is disturbed.

Accordingly, in order to protect the penetrated ends 23a1 of the bosses 23a from the collision of the flying objects such as stones, as shown in FIGS. 2 and 3, the housing 25 of the ball joint 13 is attached with the link protector 29 of this embodiment. The link protector 29 of this embodiment corresponds to the "cover member" of the present invention.

### <Configuration of Link Protector 29 of This Embodiment>

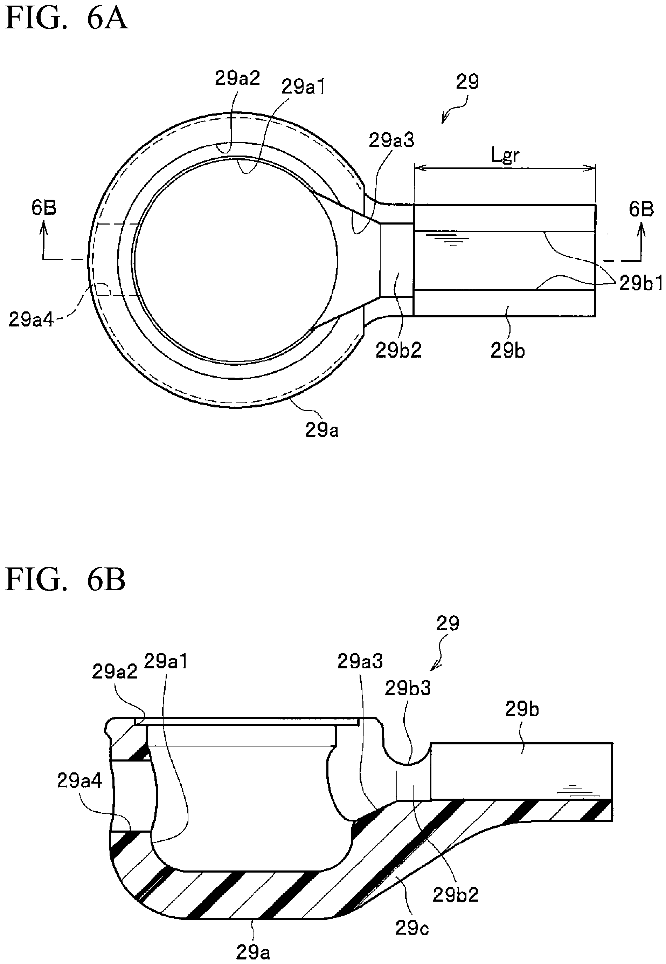

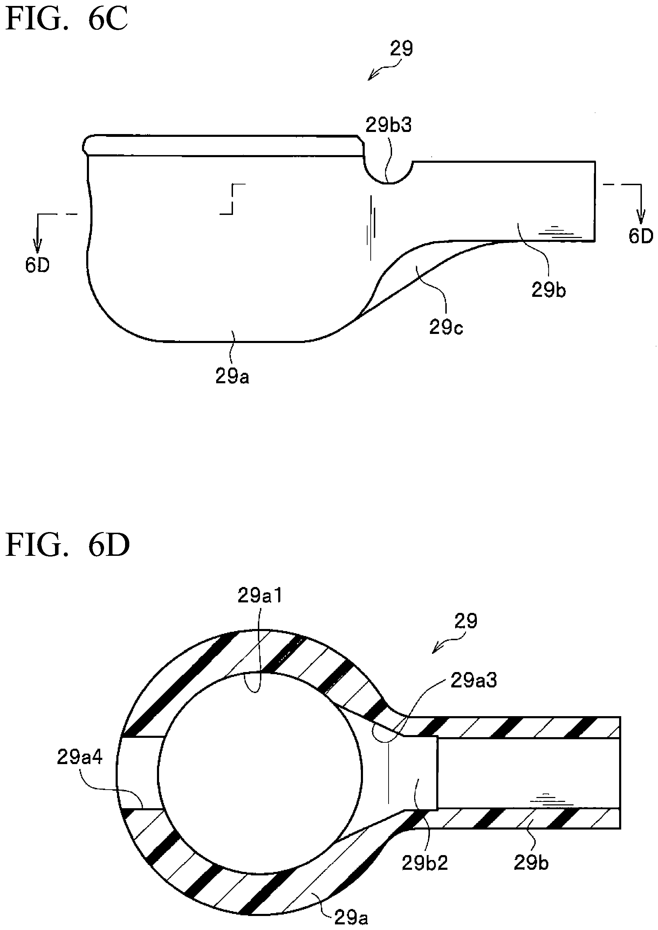

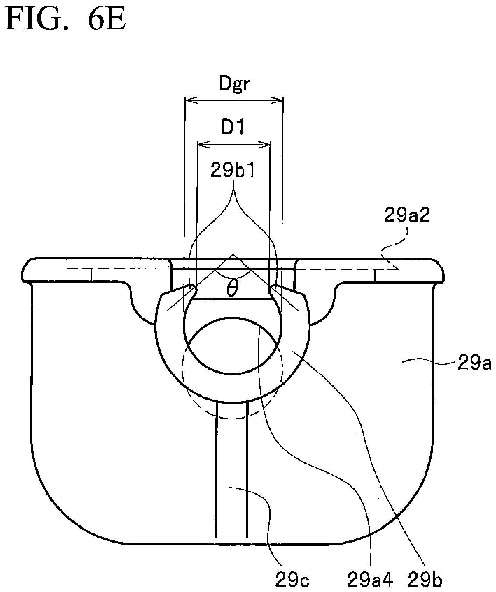

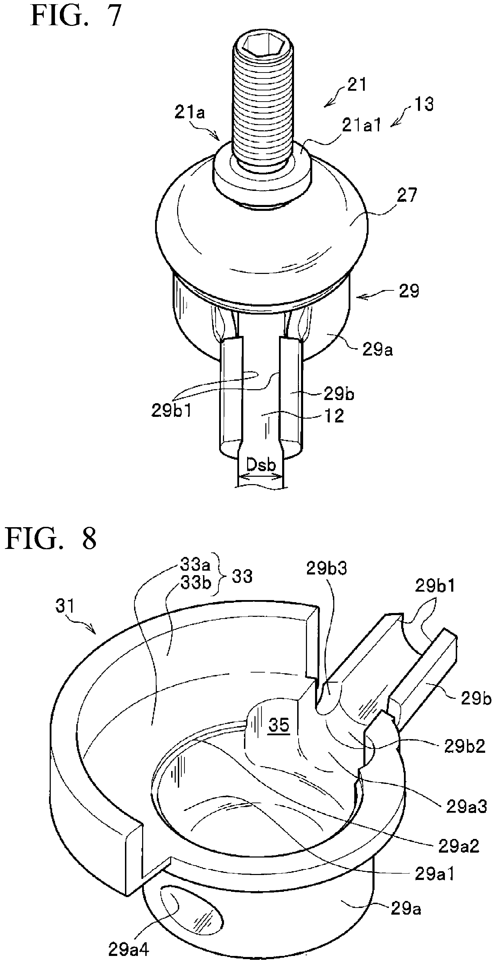

Next, the link protector 29 of this embodiment will be described with reference to FIGS. 3, 5, 6A to 6D and 7. FIG. 5 is a perspective view of the link protector 29 of this embodiment viewed obliquely from above. FIG. 6A is a top view of the link protector 29 of this embodiment. FIG. 6B is a cross-sectional view taken along line 6B-6B shown in FIG. 6A. FIG. 6C is a front view of the link protector 29. FIG. 6D is a cross-sectional view taken along line 6D-6D shown in FIG. 6C. FIG. 6E is a side view of the link protector 29 viewed from the position of a holding portion. FIG. 7 is a perspective view of the ball joint 13 attached with the link protector 29 of this embodiment, viewed obliquely from above.

As shown in FIG. 5, the link protector 29 of this embodiment is configured including a main portion 29a having a substantially bowl shape (a cylindrical shape with a bottom), and a substantially gutter-shaped holding portion 29b. In addition, the "cylindrical shape with a bottom" of this embodiment includes a "bowl shape".

The link protector 29 is integrally formed through injection molding or the like of a synthetic resin. For the resin material of the link protector 29, for example, PA66-GF30 (PA66 with 30% to 50% by weight glass fiber / melting point: about 270°C) is preferably used in consideration of having thermoplasticity, satisfying predetermined strength requirements and the like. However, for the resin material of the link protector 29, materials such as engineering plastics such as PEEK (polyetheretherketone), PA66 (Polyamide 66), PPS (Poly Phenylene Sulfide Resin) and POM (polyoxymethylene), super engineering plastics, FRP (Fiber Reinforced Plastics), GRP (glass reinforced plastic) and CFRP (Carbon Fiber Reinforced Plastics), other than PA66-GF30, may be suitably used. Further, the link protector 29 may be made of a material other than resin (for example, metal) as long as the link protector 29 can be appropriately elastically deformed.

As shown in FIGS. 3 and 5, the substantially bowl-shaped main portion 29a of the link protector 29 includes a housing portion 29a1 having an inner diameter slightly greater than the outer diameter of the housing 25. The housing portion 29a1 is configured such that substantially the whole of the housing 25 is accommodated therein. A slight gap is provided between the housing 25 and the link protector 29. That is, a slight gap is provided between the outer circumferential surface of the side wall of the housing 25 and the inner circumferential surface of the side wall of the link protector 29, and a slight gap is provided between the outer surface (the lower surface) of the bottom portion of the housing 25 and the inner surface (the upper surface) of the bottom portion of the link protector 29. The gap in the up-down direction at the bottom portion is greater than the gap in the radial direction at the side wall. A reason for providing a slight gap between the housing 25 and the link protector 29 is to smoothly discharge water, which has entered the gap, outward of the link protector 29 in cooperation with a conical-shaped portion 29a3 and a through-hole 29a4 described later.

As shown in FIGS. 3, 5, 6A and 6B, a receiving portion 29a2 (a side wall-upper portion) configured of an annular step is formed in the side wall-upper portion of the main portion 29a of the link protector 29. That is, the receiving portion 29a2 is configured by the opening peripheral edge portion of the top surface of the cylindrical side wall of the link protector 29 being depressed downward. As shown in FIG. 3, the upper annular end 25a included in the housing 25 is configured to right fit into the receiving portion 29a2. That is, the upward facing surface of the receiving portion 29a2 of the link protector 29 is engaged with the lower surface of the upper annular end 25a of the housing 25. In addition, the receiving portion 29a2 is not an essential component of this embodiment, but the upper portion of the side wall of the link protector 29 in which the receiving portion 29a2 is not formed may be engaged with the lower surface of the upper annular end 25a of the housing 25.

As a result, the ball portion 21b of the ball stud 21 and the ball seat 23 that realize the ball joint function can be firmly protected by the double structure of the housing 25 and the link protector 29.

The receiving portion 29a2 provided in the annular side wall-upper portion of the substantially bowl-shaped link protector 29 (refer to FIG. 5) is positioned to face, in the up-down direction, the annular lower end portion of the dust cover 27 as shown in FIG. 3. Further, as shown in FIG. 3, the outer diameter of the main portion 29a of the link protector 29 is set to substantially the same dimension as the outer diameter of the dust cover 27. Therefore, according to the link protector 29, the effect of protecting the lower end portion of the dust cover 27 can be expected. In addition, the annular side wall-upper portion of the main portion 29a may be in contact with or be close to the annular lower end portion of the dust cover 27.

As shown in FIGS. 5, 6A and 6B, the conical-shaped portion 29a3 (a communication portion) whose diameter gradually decreases as it goes from the main portion 29a-side to the holding portion 29b-side thereof is formed in the joint portion between the main portion 29a and the holding portion 29b of the link protector 29. The angle defined by the cone of the conical-shaped portion 29a3 is not particularly limited, but an appropriate angle of, for example, 30° to 60° is set therefor. When water enters the gap between the housing 25 and the link protector 29, the conical-shaped portion 29a3 has functions of smoothly discharging the water outward of the link protector 29. In addition, the conical-shaped portion 29a3 has functions of securing the rigidity of the joint portion between the main portion 29a and the holding portion 29b of the link protector 29.

As shown in FIGS. 5, 6A and 6B, the circular through-hole 29a4 is opened at a portion of the main portion 29a of the link protector 29 facing the conical-shaped portion 29a3. That is, the through-hole 29a4 is provided in the side wall of the main portion 29a opposite to the conical-shaped portion 29a3 in the radial direction of the main portion 29a. The inner diameter of the through-hole 29a4 is not particularly limited, but an appropriate dimension of, for example, 0.3 to 0.4 times the outer diameter of the main portion 29a is set therefor. When water enters the gap between the housing 25 and the link protector 29, the through-hole 29a4 has functions of smoothly discharging the water outward of the link protector 29 in cooperation with the conical-shaped portion 29a3.

As described above, the stabilizer link 11 of this embodiment is provided in the vehicle in an attitude in which the support bar 12 extends in substantially the vertical direction (refer to FIG. 1). If the link protector 29 of this embodiment is provided on the lower end side of the support bar 12, the through-hole 29a4 may be provided in a portion of the side wall of the main portion 29a facing downward in a state where the stabilizer link 11 is provided in the vehicle. In this case, the water that has entered the inside of the main portion 29a can be easily discharged through the through-hole 29a4.

As shown in FIG. 5, the substantially gutter-shaped holding portion 29b of the link protector 29 is connected to the side wall of the main portion 29a in which the conical-shaped portion 29a3 is formed, and radially extends from the main portion 29a. As shown in FIG. 5, the holding portion 29b has a substantially gutter shape obtained by cutting out and removing a part of a cylinder extending in the axial direction thereof from the cylinder. The inner diameter Dgr of the holding portion 29b (refer to FIG. 6E) is set to be equal to or slightly less than the outer diameter Dsb of the support bar 12 (refer to FIG. 7). The inner diameter Dgr of the holding portion 29b refers to the distance between inner surfaces of the holding portion 29b facing each other in the opposing direction (the left-right direction in FIG. 6E) of a pair of cutout ends 29b1 of the holding portion 29b.

The holding portion 29b is formed in a C-shape opening upward when viewed in the axial direction thereof.

As shown in FIG. 6E, a gap D1 between the pair of cutout ends 29b1 of the substantially gutter-shaped holding portion 29b of the link protector 29 is set to be slightly less than the inner diameter Dgr of the holding portion 29b. The gap D1 is set in consideration of that the angle θ (refer to FIG. 6E) defined by the pointing directions (the projecting directions) of the pair of cutout ends 29b1 with respect to tangent of the outer circumferential surface of the support bar 12 exceeds about 90° (preferably 120°) when the outer circumferential surface of the support bar 12 is in contact with the pair of cutout ends 29b1. The holding portion 29b is configured to be elastically deformable such that the distance between the pair of cutout ends 29b1 can be increased.

Since the gap D1 is set to be less than the inner diameter Dgr of the holding portion 29b, when the support bar 12 is pushed and fitted into the holding portion 29b, it is necessary to extend the gap D1 of the pair of cutout ends 29b1 to about the outer diameter Dsb of the support bar 12.

Accordingly, as shown in FIG. 6E, each of the pair of cutout ends 29b1 has a tapered shape in the transverse cross-section thereof. In other words, the thickness of the pair of cutout ends 29b1 is less than the thickness of the general portion of the holding portion 29b other than the cutout ends 29b1. Further, the tips of the pair of the cutout ends 29b1 are subjected to rounding work for eliminating corners. The tips of the pair of cutout ends 29b1 are portions that contact the outer circumferential surface of the support bar 12 when the support bar 12 is pushed and fitted into the holding portion 29b.

Since the holding portion 29b is elastically deformable, when the pair of cutout ends 29b1 of the holding portion 29b is pushed toward the outer circumferential surface of the support bar 12, the distance between the pair of cutout ends 29b1 is increased, and the support bar 12 is inserted into the inside of the holding portion 29b. Then, since the pair of cutout ends 29b1 approach each other through the restoration deformation of the holding portion 29b, the holding portion 29b can properly hold the support bar 12, and the link protector 29 is arranged on one end side of the support bar 12.

According to the above configuration, the process of pushing and fitting the support bar 12 into the holding portion 29b can be smoothly and properly carried out.

The axial length Lgr (refer to FIG. 6A) of the holding portion 29b is set to about 2 to 3 times the outer diameter Dsb (refer to FIG. 7) of the support bar 12. By setting in this manner, necessary and sufficient sizes of the holding force and the frictional force generated between the holding portion 29b and the support bar 12 when the holding portion 29b holds the support bar 12 can be secured. As a result, the link protector 29 can be firmly attached to the ball joint 13 using the holding force and the frictional force generated by the holding portion 29b firmly holding the support bar 12.

As shown in FIGS. 5, 6A and 6B, a diameter-expanded portion 29b2 is provided at a portion of the holding portion 29b adjacent to the conical-shaped portion 29a3 of the main portion 29a. The diameter-expanded portion 29b2 is set to be slightly greater than the inner diameter Dgr (refer to FIG. 6E) of the holding portion 29b. Since the diameter-expanded portion 29b2 is formed, a gap is provided between the holding portion 29b and the support bar 12. When water enters the gap between the housing 25 and the link protector 29, the diameter-expanded portion 29b2 has functions of smoothly discharging the water outward of the link protector 29 in cooperation with the conical-shaped portion 29a3, the through-hole 29a4, and a cutout 29b3 described below.

As shown in FIGS. 5, 6B and 6C, the cutout 29b3 is provided in the vicinity of the diameter-expanded portion 29b2 of the holding portion 29b. The cutout 29b3 is formed by cutting out and removing a part in the vicinity of the diameter-expanded portion 29b2 from the holding portion 29b in an arc shape. The dimension in the depth direction of the cutout 29b3 is set to be shallower than the center of the support bar 12. That is, the lower end of the cutout 29b3 is positioned above the central axis of the support bar 12 in the up-down direction.

Here, in the process of pushing and fitting the support bar 12 into the holding portion 29b, a strong bending stress may occur in the joint portion (corresponding to "the connection portion connecting the side wall of the main portion and the holding portion" of the present invention) between the main portion 29a and the holding portion 29b of the link protector 29.

Accordingly, the cutout 29b3 has functions of alleviating the bending stress generated in the process of pushing and fitting the support bar 12 into the holding portion 29b. In addition, when water enters the gap between the housing 25 and the link protector 29, the cutout 29b3 has functions of smoothly discharging this water outward of the link protector 29 in cooperation with the conical-shaped portion 29a3, the through-hole 29a4 and the diameter-expanded portion 29b2. The conical-shaped portion 29a3, the through-hole 29a4, the diameter-expanded portion 29b2 and the cutout 29b3 correspond to the "drainage mechanism" of the present invention. Further, the cutout 29b3 may not be formed.

As shown in FIGS. 6B, 6C and 6E, a beam-shaped reinforcement portion 29c that increases the mechanical strength of the joint portion between the main portion 29a and the holding portion 29b of the link protector 29 is provided on the back side (the lower side) of the diameter-expanded portion 29b2 of the holding portion 29b. The angle and the thickness dimension of the reinforcement portion 29c may be set to appropriate values depending on the strength required for the joint portion between the main portion 29a and the holding portion 29b. The reinforcement portion 29c has functions of bearing an external force applied to the joint portion in the process of pushing and fitting the support bar 12 into the holding portion 29b.

In short, the cutout 29b3 and the reinforcement portion 29c together receive the bending stress generated in the process of pushing and fitting the support bar 12 into the holding portion 29b, whereby the required load capacity for the joint portion between the main portion 29a and the holding portion 29b of the link protector 29 can be secured.

### <Configuration of Link Protector 31 of Modification>

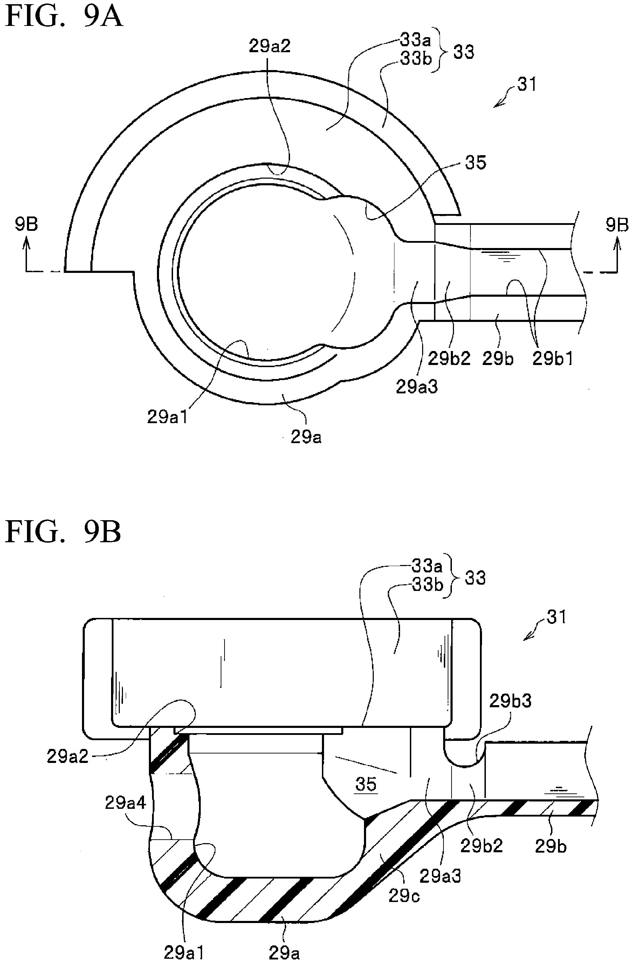

Next, the configuration of a link protector 31 of a modification of this embodiment will be described with reference to FIGS. 8, 9A and 9B. FIG. 8 is a perspective view of the link protector 31 of the modification viewed obliquely from above. FIG. 9A is a top view of the link protector 31 of the modification. FIG. 9B is a cross-sectional view taken along line 9B-9B shown in FIG. 9A.

The configuration of the link protector 29 of the above-described embodiment and the configuration of the link protector 31 of the modification have common parts. Accordingly, in order to avoid duplication of description, the common parts are attached with the same reference signs, the description thereof is omitted, and the description will be made focusing on differences between the above-described embodiment and the modification.

There are two main differences between the configuration of the link protector 29 of the above-described embodiment and the configuration of the link protector 31 of the modification.

The first difference is that in the link protector 31 of the modification, as shown in FIGS. 8, 9A and 9B, a protection wall 33 is provided in the side wall-upper portion of the main portion 29a. The protection wall 33 includes a flat portion 33a extending in a substantially arc shape continuously with the side wall-upper portion of the main portion 29a, and a straight wall 33b vertically erecting from the outer peripheral edge of the flat portion 33a.

According to the protection wall 33 having such a configuration, the circumferential side surface of the dust cover 27 on the side thereof in which the protection wall 33 is positioned can be protected from disturbances such as collision of flying objects.

The second difference is that in the link protector 31 of the modification, as shown in FIG. 8, 9A and 9B, a recess 35 configured of curved surfaces is provided in a portion of the side wall of the main portion 29a adjacent to the conical-shaped portion 29a3. The recess 35 is formed at an inner portion of the conical-shaped portion 29a3 in the inner surface of the side wall of the main portion 29a in the radial direction of the main portion 29a and is recessed outward in the radial direction.

According to the recess 35 having such a configuration, when water enters the gap between the housing 25 and the link protector 31, a space for temporarily containing the water and smoothly discharging it can be secured.

### (Function and Effect Obtained by Stabilizer Link 11 of Embodiment of Present Invention)

Next, the function and effect obtained by the stabilizer link 11 of the embodiment of the present invention will be described.

A first aspect of the present invention is the stabilizer link 11 for linking the suspension 15 and the stabilizer 17 provided in the vehicle, the stabilizer link 11 including: the support bar 12; and the pair of ball joints 13 provided at two ends of the support bar 12. Each of the pair of ball joints 13 includes: the ball stud 21 including the stud portion 21a and the ball portion 21b, and the ball seat 23 and the housing 25 (the support member) which rotatably supports the ball portion 21b of the ball stud 21 and to which the support bar 12 is connected.

In the stabilizer link 11 of the first aspect of the present invention, at least one end of the support bar 12 is provided with the link protector 29 or 31. The link protector 29 or 31 includes: the main portion 29a having a cylindrical shape with a bottom and covering the ball seat 23 and the housing 25, the drainage mechanism (the conical-shaped portion 29a3, the through-hole 29a4, the diameter-expanded portion 29b2, and the cutout 29b3) for discharging water that has entered the gap between the housing 25 and the link protector 29 or 31, and the holding portion 29b holding the support bar 12.

In the stabilizer link 11 of the first aspect of the present invention, the holding portion 29b holds the support bar 12, whereby the main portion 29a of the link protector 29 or 31 is attached to cover the ball seat 23 and the housing 25.

According to the first aspect of the present invention, the link protector 29 of the stabilizer link 11 is provided with the main portion 29a having a cylindrical shape with a bottom and covering at least one of a pair of support members (the combinations of the ball seat 23 and the housing 25), and thus the main portion 29a covering the support member can protect the support member (including the heat caulked portion applied to the penetrated end 23a1 of the boss 23a of the ball seat 23) from collision of flying objects. As result, it is possible to obtain the stabilizer link 11 that limits the ball joint function from being disturbed due to disturbance such as collision of the flying objects.

In addition, since the link protector 29 or 31 is provided with the drainage mechanism (the conical-shaped portion 29a3, the through-hole 29a4, the diameter-expanded portion 29b2, and the cutout 29b3) for discharging water that has entered the gap between the housing 25 and the link protector 29 or 31, a situation where the entered water intrudes inside the ball seat 23 or into a gap between the ball seat 23 and the housing 25 can be prevented in advance.

A second aspect of the present invention is that in the stabilizer link 11 of the first aspect, as shown in FIG. 5, the drainage mechanism includes: the through-hole 29a4 provided in the side wall of the main portion 29a of the link protector 29 or 31, the diameter-expanded portion 29b2 provided on the inner side wall of the holding portion 29b and allowing a gap to be provided between the holding portion 29b and the support bar 12, and the conical-shaped portion 29a3 (a communication portion) provided to allow the inside of the main portion 29a and the gap to communicate with each other.

According to the second aspect of the present invention, when water enters the gap between the housing 25 and the link protector 29 or 31, the conical-shaped portion 29a3, the through-hole 29a4 and the diameter-expanded portion 29b2 can cooperate to smoothly discharge the water outward of the link protector 29 or 31.

A third aspect of the present invention is that in the stabilizer link 11 of the second aspect, the through-hole 29a4 is provided in the side wall of the main portion 29a facing the conical-shaped portion 29a3.

According to the third aspect of the present invention, since the through-hole 29a4 and the conical-shaped portion 29a3 face each other, water that has entered the inside of the main portion 29a through, for example, the conical-shaped portion 29a3 can be smoothly discharged outward of the link protector 29 through the through-hole 29a4.

A fourth aspect of the present invention is that in the stabilizer link 11 of the second or third aspect, the cutout 29b3 obtained by cutting out a part of the inner side wall of the holding portion 29b is provided in the vicinity of the diameter-expanded portion 29b2 of the holding portion 29b.

According to the fourth aspect of the present invention, the cutout 29b3 relieves the bending stress generated in the process of pushing and fitting the support bar 12 into the holding portion 29b, and when water enters the gap between the housing 25 and the link protector 29, the cutout 29b3 can smoothly discharge the water outward of the link protector 29 in cooperation with the conical-shaped portion 29a3, the through-hole 29a4 and the diameter-expanded portion 29b2.

A fifth aspect of the present invention is that in the stabilizer link 11 of one of the first to fourth aspects, a joint portion (a connection portion) between the side wall of the main portion 29a and the holding portion 29b of the link protector 29 or 31 is provided with the reinforcement portion 29c that increases the mechanical strength of the joint portion (the connection portion).

According to the fifth aspect of the present invention, the reinforcement portion 29c receives the external force applied to the joint portion (the connection portion) in the process of pushing and fitting the support bar 12 into the holding portion 29b, and thus the required load capacity for the joint portion (the connection portion) between the main portion 29a and the holding portion 29b of the link protector 29 can be secured.

A sixth aspect of the present invention is that in the stabilizer link 11 of one of the first to fifth aspects, the ball joint 13 is attached with the dust cover 27 for isolating the ball portion 21b from external environment, and the annular side wall-upper portion of the main portion 29a is in contact with or close to the annular lower end of the dust cover 27.

According to the sixth aspect of the present invention, the lower end portion of the dust cover 27 can be protected by the main portion 29a of the link protector 29 or 31.

A seventh aspect of the present invention is that in the stabilizer link 11 of one of the first to sixth aspects, the housing 25 (the support member) is provided with the upper annular end 25a (the engagement portion) engaged with the annular receiving portion 29a2 (the side wall-upper portion) of the main portion 29a.

According to the seventh aspect of the present invention, even when an upward force is applied to the main portion 29a due to collision or the like of flying objects, the main portion 29a can be prevented from moving upward relative to the housing 25, and the gap between the lower surface of the bottom portion of the housing 25 and the upper surface of the bottom portion of the main portion 29a can be appropriately maintained. Therefore, it is possible to prevent the heat caulked portion of the penetrated end 23a1 from breaking or to prevent that the housing 25 cannot properly hold the ball seat 23, due to collision of the upper surface of the bottom portion of the main portion 29a with the lower surface of the bottom portion of the housing 25.

An eighth aspect of the present invention is a stabilizer with a stabilizer link, including: the stabilizer 17; and the stabilizer link 11 of one of the first to seventh aspects, which is connected to the stabilizer 17.

According to the eighth aspect of the present invention, the stabilizer 17 with the stabilizer link 11 can be obtained, which can limit the ball joint function from being disturbed by the collision or the like of the flying objects.

### (Other Embodiments)

The above-described embodiments denote examples of the realization of the present invention. Therefore, the technical scope of the present invention is not interpreted to be limited to these embodiments. The present invention can be implemented in various forms without departing from the subject matter or the main features of the present invention.

For example, in the description of the stabilizer link 11 of the embodiment of the present invention, an example is described in which the four through-holes 25c are opened in the bottom portion of the housing 25, and the four bosses 23a whose number corresponds to the number of the through-holes 25c of the housing 25 are integrally formed in the bottom portion of the ball seat 23, but the present invention is not limited to this example. The number of the through-holes 25c and the number of the bosses 23a may be any numbers as long as the numbers correspond to each other.

Also, in the description of the stabilizer link 11 of the embodiment of the present invention, an example is described in which the combination of the ball seat 23 made of resin and the housing 25 made of metal as members constituting the support member, but the present invention is not limited to this example. The housing 25 made of metal as a member constituting the support member may be omitted. In this case, the shape of the ball seat 23 made of resin may be configured to serve as a housing. The ball seat 23 and the support bar 12 may be connected to each other using a fastening member such as a bolt or a bracket.

Further, in the description of the stabilizer link 11 of the embodiment of the present invention, an example is described in which the link protector 29 or 31 is provided in one of the pair of the support members (composed of the combinations of the ball seat 23 and the housing 25), but the present invention is not limited to this example. Either one of the link protectors 29 and 31 may be provided in each of the pair of support members, or a configuration in which the link protectors 29 and 31 are provided in the pair of support members, respectively, may be adopted.

That is, at least one end of the support bar may be provided with the link protector of the present invention.

The holding portion 29b of the above-described embodiment has a gutter shape in which a part of a cylinder is cut out in the axial direction of the cylinder, but the present invention is not limited to this. For example, the holding portion may be composed of a plurality of C-ring-shaped members disposed at intervals in the axial direction of the support bar 12.

The holding portion 29b of the above-described embodiment has a gutter shape that opens upward, but in order to prevent detachment of the holding portion 29b from the support bar 12, a configuration may be adopted in which a cover member covering the opening of the gutter shape or a member preventing an increase of the separation of the pair of cutout ends 29b1 is provided after the holding portion 29b holds the support bar 12. The cover member or the like may be pivotably connected to the holding portion 29b using a hinge or the like.

### Description of Reference Signs

- 11: stabilizer link
- 12: support bar
- 13: ball joint
- 15: suspension
- 17: stabilizer
- 21: ball stud
- 21a: stud portion
- 21b: ball portion
- 23: ball seat (support member)
- 25: housing (support member)
- 27: dust cover
- 29: link protector
- 29a: main portion
- 29a3: conical-shaped portion (drainage mechanism, communication portion)
- 29a4: through-hole (drainage mechanism)
- 29b: holding portion
- 29b2: diameter-expanded portion (drainage mechanism)
- 29b3: cutout (drainage mechanism)
- 29c: reinforcement portion
- 31: link protector

## Claims

1. A stabilizer link for linking a suspension and a stabilizer provided in a vehicle, the stabilizer link comprising:
a support bar; and
a pair of ball joints provided at two ends of the support bar, wherein
each of the pair of ball joints includes:
a ball stud including a stud portion and a ball portion, and
a support member which rotatably supports the ball portion of the ball stud and to which the support bar is connected,
at least one end of the support bar is provided with a link protector, and
the link protector includes:
a main portion having a cylindrical shape with a bottom and covering the support member,
a drainage mechanism for discharging water that has entered a gap between the support member and the link protector, and
a holding portion holding the support bar.

2. The stabilizer link according to claim 1, wherein
the drainage mechanism includes:
a through-hole provided in a side wall of the main portion,
a diameter-expanded portion provided on an inner side wall of the holding portion and allowing a gap to be provided between the holding portion and the support bar, and
a communication portion provided to allow an inside of the main portion and the gap to communicate with each other.

3. The stabilizer link according to claim 2, wherein
the through-hole is provided in the side wall of the main portion facing the communication portion.

4. The stabilizer link according to claim 2 or 3, wherein
a cutout obtained by cutting out a part of the inner side wall of the holding portion is provided in the vicinity of the diameter-expanded portion of the holding portion.

5. The stabilizer link according to any one of claims 1 to 4, wherein
a connection portion connecting a side wall of the main portion and the holding portion to each other is provided with a reinforcement portion that increases a mechanical strength of the connection portion.

6. The stabilizer link according to any one of claims 1 to 5, wherein
a ball joint of the ball joints is attached with a dust cover for isolating the ball portion from external environment, and
an annular side wall-upper portion of the main portion is in contact with or close to an annular lower end of the dust cover.

7. The stabilizer link according to any one of claims 1 to 6, wherein
the support member is provided with an engagement portion engaged with an annular side wall-upper portion of the main portion.

8. A stabilizer with a stabilizer link, comprising:
a stabilizer; and
the stabilizer link according to any one of claims 1 to 7, which is connected to the stabilizer.
